# EUROPÄISCHE PATENTSCHRIFT

(11) **EP 2 766 719 B1**
(45) Veröffentlichungstag und Bekanntmachung des Hinweises auf die Patenterteilung: **09.09.2020**
(21) Anmeldenummer: 12778685.3
(22) Anmeldetag: 10.10.2012
(51) Int. Cl.: G01N 27/12

(54) **SENSOR UND VERFAHREN ZUM HERSTELLEN EINES SENSORS**
SENSOR AND METHOD FOR MANUFACTURING A SENSOR
CAPTEUR ET PROCÉDÉ DE FABRICATION D'UN CAPTEUR

(30) Priorität: 14.10.2011 DE 102011054501
(43) Veröffentlichungstag der Anmeldung: 20.08.2014
(73) Patentinhaber: Heinrich Heine Universität Düsseldorf, 40225 Düsseldorf (DE)
(72) Erfinder: SCHIERBAUM, Klaus, 47803 Krefeld (DE); EL ACHHAB, Mhamed, 40225 Düsseldorf (DE); SCHÜLE, Christiane, 40547 Düsseldorf (DE)
(74) Vertreter: Michalski Hüttermann & Partner Patentanwälte mbB
(86) Internationale Anmeldenummer: PCT/EP2012/070066
(87) Internationale Veröffentlichungsnummer: WO 2013/053762

(56) Entgegenhaltungen:
- WO-A2-2004/109807
- DE-A1- 2 824 609
- US-A1- 2002 118 027
- DING ET AL: "Hydrogen sensors based on aligned carbon nanotubes in an anodic aluminum oxide template with palladium as a top electrode", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 124, Nr. 1, 16. Mai 2007 (2007-05-16), Seiten 12-17, XP022080497, ISSN: 0925-4005, DOI: 10.1016/J.SNB.2006.11.034

## Beschreibung

Die vorliegende Erfindung betrifft einen Sensor, insbesondere einen Gassensor und/oder einen Flüssigkeitssensor. Die vorliegende Erfindung betrifft ferner ein Verfahren zum Herstellen eines Sensors.

Sensoren, wie beispielsweise Gassensoren, sind weit verbreitet und für viele Anwendungsgebiete bekannt. Beispielsweise sind Gassensoren bekannt, die auf dem flüssigelektrochemischen Prinzip oder auf dem Prinzip der Wärmeleitung basieren. Ferner sind Gassensoren bekannt, die MOS-Kondensatoren und Kapazitätsmessungen, Schottkydioden und Strom- /Spannungsmessungen, Feldeffekttransistoren, geheizte halbleitende Metalloxide und elektrische Widerstands- oder Leitfähigkeitsmessungen, oder auch ionenleitende Membrane und Potentialmessungen als Detektionsprinzip ausnutzen.

Die vorgenannten Gassensoren erfordern meist aufwändige und damit kostenintensive Herstellungsverfahren und haben daher einen hohen Preis, was sie für eine Vielzahl von Anwendungen nur bedingt einsetzbar und begrenzt wirtschaftlich macht. Ferner zeigen viele der vorgenannten Gassensoren eine nicht unwesentliche Querempfindlichkeit zu anderen, als den zu detektierenden in einem Gas enthaltenen Bestandteilen, wie etwa weiteren Gasen, so dass die erhaltenen Messergebnisse nur eine eingeschränkte Genauigkeit aufweisen können. Darüber hinaus weisen viele aus dem Stand der Technik bekannte Gassensoren eine im Vergleich zur Raumtemperatur teilweise beträchtlich erhöhte Arbeitstemperatur auf, die eine Beheizung des Sensors für eine Messung notwendig macht. Dadurch können derartige Sensoren unter Umständen für portable Anwendungen nur bedingt oder überhaupt nicht einsetzbar sein. Ferner besteht bedingt durch hohe Arbeitstemperaturen insbesondere bei der Messung von Wasserstoff Explosionsgefahr, die verständlicherweise umgangen werden sollte. Darüber hinaus führt die Notwendigkeit des Heizens eines Sensors stets auch zu einem erhöhten Stromverbrauch, der den Sensor nur bedingt wirtschaftlich und ferner für portable Anwendungen nur bedingt nutzbar machen kann. Weiterhin benötigt die Heizung eine zusätzliche Heizschicht oder Heizwendel und elektrische Zuführungen beziehungsweise elektrische Anschlüsse am Sensor.

DE 10 2006 020 253 B3 beschreibt einen Titandioxidsensor zur Messung von Konzentrationen reduzierender Gase wie Wasserstoff, Methan oder Ammoniak. Der Sensor gemäß dieser Druckschrift besteht aus wenigstens zwei Lagen polykristallinen Titandioxids auf einem beliebigen Substrat, welches den Endtemperaturen von etwa 500°C zur Kristallisierung der Schichten standhalten soll. Die wenigstens zwei Lagen Titandioxid sind übereinander angeordnet, wobei die äußere Lage, welche die Oberfläche des Sensors zum Gasraum bildet, mit Katalysatorpartikeln versehen ist, die sich im Bereich der Korngrenzen befinden, und wobei die unmittelbar darunter angeordnete Lage mit einem Alkalimetall angereichert ist. Dabei soll ein derartiger Sensor hauptsächlich Anatas-Titandioxid enthalten. Die Herstellung der entsprechenden Lagen erfolgt durch Spincoating oder einen anderen Sol-Gel-Beschichtungsschritt.

Nachteilig an einem derartigen Sensor ist, dass dieser für eine verlässliche und hochgenaue Messung Arbeitstemperaturen in einem Bereich oberhalb der Raumtemperatur benötigt, was insbesondere für eine Messung von Wasserstoff nachteilig ist und ferner die Messung aufwändig und kostenintensiv gestalten kann. Darüber hinaus ist das Herstellungsverfahren für einen derartigen Sensor aufwändig und damit kostenintensiv, was auch einen derartigen Sensor kostenintensiv gestaltet.

DE2824609 beschreibt einen Feuchtesensor mit einer metallischen Grundschicht, einer metalloxidischen Konversionsschicht und einer porösen Deckschicht, beispielweise aus Kolloidkohlenstoff. Es ist daher die Aufgabe der vorliegenden Erfindung, einen Sensor zu schaffen, der auf einfache und/oder kostengünstige Weise herstellbar ist, und/oder der einfacher, robuster und/oder kostengünstiger anwendbar ist, und/oder in einem großen Temperaturbereich umfassend die Umgebungstemperatur eine gute Sensitivität und Selektivität aufweist.

Diese Aufgabe wird durch einen Sensor gemäß Anspruch 1 gelöst. Diese Aufgabe wird ferner durch ein Verfahren zum Herstellen eines Sensors gemäß Anspruch 6 gelöst. Bevorzugte Ausgestaltungen der Erfindung sind in den Unteransprüchen angegeben.

Gegenstand der vorliegenden Erfindung ist ein Sensor mit einer Schichtanordnung, wobei die Schichtanordnung wenigstens eine Grundschicht, eine Mittelschicht und eine Deckschicht aufweist, wobei die Mittelschicht zumindest teilweise auf der Grundschicht angeordnet ist und mit dieser in Kontakt steht und wobei die Deckschicht zumindest teilweise auf der Mittelschicht angeordnet ist und mit dieser in Kontakt steht, wobei die Grundschicht ein Metall aufweist, wobei die Mittelschicht ein Metalloxid aufweist und wobei die Deckschicht porös ist und ein Material aufweist, das ausgewählt ist aus der Gruppe umfassend elektrisch leitfähige Kohlenstoffverbindungen, wie insbesondere Graphit oder Kohlenstoff-Nanoröhren (CNT), organische elektrische Leiter und unedle Metalle, und wobei die Grundschicht und die Deckschicht für eine Leitfähigkeitsmessung und/oder eine Widerstandsmessung elektrisch kontaktierbar sind.

Unter einer "Schichtanordnung" kann im Sinne der vorliegenden Erfindung insbesondere eine Anordnung aus mehreren aufeinanderfolgenden Schichten verstanden werden. Dabei können die einzelnen Schichten jeweils als Einzelschicht oder aus einer Mehrzahl an Teilschichten aufgebaut sein. Ferner können die einzelnen Schichten unmittelbar aufeinander angeordnet sein und so insbesondere elektrisch miteinander in Kontakt stehen, oder aber durch eine geeignete Zwischenlage beziehungsweise Zwischenschicht aufeinander angeordnet und miteinander verbunden sein beziehungsweise insbesondere elektrisch in Kontakt stehen. Unter einer Schicht als solcher kann dabei ferner im Sinne der vorliegenden Erfindung insbesondere jede Lage verstanden werden, die jede geeignete Form, Dicke und Gestaltung aufweisen kann. Unter einer "Grundschicht" im Sinne der vorliegenden Erfindung kann insbesondere eine Trägerschicht verstanden werden, auf der weitere Schichten angeordnet sind. Die Grundschicht kann dabei selbstragend sein, also etwa selbst eine ausreichende Stabilität aufweisen, um etwa sich selbst oder auch der Schichtanordnung eine ausreichende Stabilität zu verleihen. Ferner kann die Grundschicht als unterste Schicht des Sensors ausgestaltet sein, oder auch auf einem weiteren Substrat aufgebracht sein. In diesem Fall ist das Substrat insbesondere nicht elektrisch leitend und kann etwa aus Kunststoff, Glas oder einer Keramik ausgebildet sein. Die Grundschicht weißt ein Metall auf und kann insbesondere aus dem Metall ausgestaltet sein. Beispielsweise kann die Grundschicht aus einem Metall bestehen. Insbesondere, wenn das Metall der Grundschicht eine ausreichende Dicke aufweist, kann auf das Vorsehen eines Substrats, auf dem die Grundschicht angeordnet ist, verzichtet werden. Die Grundschicht dient in dem erfindungsgemäßen Sensor insbesondere als untere Elektrode beziehungsweise Rückelektrode, die in an sich bekannter Weise elektrisch kontaktierbar ist.

Unter einer "Mittelschicht" kann im Sinne der vorliegenden Erfindung insbesondere eine Schicht verstanden werden, welche zwischen der Grundschicht und der Deckschicht angeordnet ist. Die Mittelschicht ist dabei vorzugsweise unmittelbar auf der Grundschicht angeordnet und steht so mit dieser in Kontakt. Dabei kann die Mittelschicht die Grundschicht vorzugsweise vollständig oder auch nur teilweise überdecken und ist somit insbesondere zumindest teilweise auf der Grundschicht angeordnet. Die Mittelschicht weist dabei ein Metalloxid auf beziehungsweise ist, etwa ausschließlich, aus diesem aufgebaut. Besonders bevorzugt weist die Mittelschicht das Oxid des Metalls auf, welches in der Grundschicht Verwendung finden kann. Die Mittelschicht kann dabei insbesondere porös sein und dabei insbesondere eine offene Porosität aufweisen. Dadurch ergibt sich eine vergrößerte Kontaktfläche zwischen der Mittelschicht und der Grundschicht sowie zwischen der Mittelschicht und der Deckschicht. Dabei kann insbesondere die Mittelschicht mit der Grundschicht innig miteinander verwachsen sein, um einen besseren elektrischen Kontakt zwischen Mittelschicht und Grundschicht zu gewährleisten. Durch die Struktur der Mittelschicht und der Grundschicht wird insbesondere eine lange Dreiphasengrenze erreicht, an der die Moleküle der Gasphase für den Fall der Verwendung als Gassensor etwa mit den atomaren Gitterbausteinen der Deckschicht und den atomaren Gitterbausteinen der Mittelschicht chemisch reagieren können. Die Mittelschicht kann beispielsweise eine spezifische Leitfähigkeit aufweisen, die in einem Bereich von ≤ 0,00001 Ohm⁻¹ m⁻¹ liegt, und kann somit im Wesentlichen elektrisch nicht leitend sein. Die Leitfähigkeit der Mittelschicht kann auch von der elektrischen Spannung abhängen beziehungsweise durch die elektrische Spannung einstellbar sein.

Unter einer "Deckschicht" kann im Sinne der vorliegenden Erfindung insbesondere eine Schicht verstanden werden, welche als oberste Schicht die Schichtanordnung beziehungsweise insbesondere die Mittelschicht zumindest teilweise abdeckt. Somit ist die Deckschicht vorzugsweise unmittelbar auf der Mittelschicht angeordnet und mit dieser in Kontakt. Dabei kann die Deckschicht die Mittelschicht vorzugsweise vollständig bedecken, oder auch nur einen Teilbereich der Mittelschicht abdecken. Die Deckschicht ist somit insbesondere die Schicht, welche mit der zu vermessenden Substanz, insbesondere einem Fluid, wie etwa einem Gas oder einer Flüssigkeit, in Kontakt kommt beziehungsweise steht und dient somit in dem erfindungsgemäßen Sensor als obere Elektrode beziehungsweise Frontelektrode. Als solche ist sie insbesondere in an sich bekannter Weise elektrisch kontaktierbar. Die Deckschicht ist dabei porös und weist dabei insbesondere eine offene Porosität auf, um einen Zugang der zu detektierenden Substanzen zu der Mittelschicht beziehungsweise zu der Grenzfläche zwischen der Mittelschicht und der Deckschicht zu ermöglichen. Die Deckschicht weist ferner ein Material auf oder besteht aus diesem, das ausgewählt ist aus der Gruppe umfassend elektrisch leitfähige Kohlenstoffverbindungen wie insbesondere Graphit oder Kohlenstoff-Nanoröhren, organische elektrische Leiter und unedle Metalle, wobei letztere vorteilhafterweise eine Konversionsschicht umfassen können, die insbesondere auf der der Mittelschicht entgegengesetzten Seite der Deckschicht beziehungsweise an Seitenbereichen der Deckschicht angeordnet sein kann.

Eine Konversionsschicht kann dabei im Sinne der Erfindung insbesondere eine Schicht sein, die durch eine chemische beziehungsweise elektrochemische insbesondere oxidative Reaktion des Metalls in einem Fluid wie insbesondere einer Flüssigkeit oder einem Gas erfolgt. Insbesondere bezüglich der Deckschicht kann es sich bei der Konversionsschicht um eine Passivierungsschicht handeln. Unter einer Passivierungsschicht kann dabei im Sinne der vorliegenden Erfindung insbesondere eine sich auf dem unedlen Metall spontan bildende Schutzschicht bezeichnet werden, die beispielsweise an Luft sich bildet und die auch absichtlich verändert werden kann, um die Schutzwirkung noch zu erhöhen. Die Passivierungsschicht entsteht somit beispielsweise dann, wenn das Metall einer oxidativen Umgebung, wie beispielsweise der Umgebungsluft, ausgesetzt ist und es so zur Oxidation des Metalls kommt. Folglich ist die Konversionsschicht beziehungsweise Passivierungsschicht insbesondere ein Metalloxid und kann die Metallschicht so vor weiterer Oxidation schützen oder diese zumindest deutlich verlangsamen, was die Langlebigkeit des Sensors erhöhen kann. Dabei sollte die Konversionsschicht nicht fluidundurchlässig sein, um eine freie fluidische Zugänglichkeit in die Poren der Deckschicht zu ermöglichen, so dass die Porosität der Deckschicht nicht beeinflusst wird.

Folglich ist die Deckschicht insbesondere aus einem als poröse Matrix dienenden elektrischen Leiter aufgebaut, der entweder kein Metall ist oder aber kein Edelmetall ist. Die Deckschicht kann für den Fall der Verwendung eines Metalls insbesondere ein eine Konversionsschicht beziehungsweise Passivierungsschicht ausbildendes Metall umfassen.

Der erfindungsgemäße Sensor erlaubt durch eine elektrische Kontaktierung der Grundschicht und der Deckschicht und durch das Anlegen einer Spannung an die Grundschicht und die Deckschicht durch eine Leitfähigkeitsmessung und/oder eine Widerstandsmessung eine qualitative und quantitative Ermittlung von zu detektierenden Substanzen. Im Detail kann ein Signal erzeugt werden beispielsweise aus einer elektrischen Wechselstrommessung des Widerstands oder der Leitfähigkeit.

Die Schichtanordnung des Sensors beziehungsweise insbesondere die Mittelschicht und die Deckschicht können an ihrem Übergang einen ohmschen Kontakt aufweisen, der mit Bezug auf eine Leitfähigkeits- beziehungsweise Widerstandsmessung eine lineare Strom-Spannungskennlinie ausbildet. Dies kann insbesondere dadurch erreicht werden, dass die Austrittsarbeit, also insbesondere der Energieunterschied zwischen dem Vakuum-Niveau und der Fermi-Energie, der Deckschicht niedriger als die der Mittelschicht ist oder dass die Elektronen durch eine sehr dünne Tunnelbarriere zwischen der Deckschicht und der Mittelschicht tunneln können, wenn die Austrittsarbeit der Deckschicht größer ist als die der Mittelschicht. Dies ist ein wesentlicher Vorteil zu aus dem Stand der Technik bekannten Schottkydioden, welche eine nicht-lineare Diodenkennlinie mit ausgeprägter Abhängigkeit des Stroms von der Spannung zeigen, was sich in einer möglichen Varianz, wie insbesondere Streuung oder Schwankung, des Nullsignals und einer größeren Messunsicherheit auswirkt. Folglich ist mit dem erfindungsgemäßen Sensor durch eine lineare Strom-Spannungskennlinie eine deutlich verbesserte Messgenauigkeit und ferner eine deutlich vereinfachte Kalibrierung möglich.

In dem erfindungsgemäßen Sensor wird die Leitfähigkeit insbesondere durch die Schichtstruktur bestimmt. Wesentlich für die Funktion und das Messverhalten des Sensors können insbesondere Grenzflächenreaktionen an oder nahe von Grenzflächen aus einem Leiter und einem Oxid sein, also von der Grenzfläche der Mittelschicht und der Deckschicht. Auf dem Oxid der Mittelschicht bilden sich etwa in der Luft Adsorbate, beispielsweise durch Chemisorption von Sauerstoff. Diese reagieren mit den nachzuweisenden Gasen, wenn bestimmte Spannungen am Sensor beziehungsweise an der Grundschicht und der Deckschicht anliegen. Es können sich auch mit den nachzuweisenden Gasen elektroaktive Adsorbate an der Grenzfläche bilden, die die elektrische Leitfähigkeit durch Aufnahme oder Abgabe von Elektronen verändern. Die Schichtanordnung stellt dabei insbesondere einen Widerstand beziehungsweise einen Kondensator dar.

Bei dem erfindungsgemäßen Sensor kann durch eine Änderung der Frequenz der anliegenden Wechselspannung insbesondere eine qualitative Messung einer Substanz in einem Substanzgemisch, wie etwa eines Gases in einem Gasgemisch, möglich sein. Durch eine geeignete Wahl der entsprechenden Frequenz können hier verschiedene Substanzen diskriminiert werden, was die Detektion weiterer Gase ermöglicht. Eine derartige qualitative Messung ist ferner ebenfalls bei einer Wahl der bei einer Messung angelegten Spannung möglich. Somit ergibt sich eine qualitative Messung beispielsweise durch eine Anpassung von Frequenz und/oder Spannung, wohingegen insbesondere die Stärke der Leitfähigkeitsveränderung beziehungsweise Widerstandsveränderung ein Maß für eine quantitative Messung darstellt. Damit ergibt sich prinzipiell die neuartige Möglichkeit, die Empfindlichkeit beziehungsweise Sensitivität des Sensors etwa für verschiedene Gase oder sonstige zu detektierende Substanzen über die angelegte Spannung beziehungsweise Frequenz zu steuern und die Querempfindlichkeit zu anderen Substanzen wie etwa Gasen so zu verringern. Dadurch kann ebenfalls eine sehr gute Selektivität für die zu detektierenden Substanzen ermöglicht werden. So können beispielsweise Wasserstoff und relative Feuchte beziehungsweise Wasser als nicht beschränkende Beispiele etwa durch unterschiedliche Spannungen spezifisch beziehungsweise einzeln und unabhängig voneinander in hoher Selektivität und Sensitivität auch nebeneinander in einem Gemisch detektiert werden.

Ein erfindungsgemäßer Sensor bietet somit eine ausgezeichnete Selektivität bei gleichzeitig hoher Sensitivität auch bei einer Messung verschiedenster Substanzen, wie etwa verschiedenster Gase, etwa Wasserstoff, Sauerstoff, Kohlenmonoxid, Kohlendioxid oder auch Flüssigkeiten, wie etwa Wasser oder Alkohol, beispielsweise in einem Gasgemisch oder Flüssigkeitsgemisch in variablen Konzentrationen, wobei die obige Aufzählung nicht abschließend ist. Dabei erlaubt der Sensor durch eine geeignete Wahl der Betriebsbedingungen, wie etwa Frequenz oder Spannung, die Messung gewünschter Substanzen ohne störende Einflüsse anderer Substanzen. Somit sind sowohl qualitative, als auch quantitative Messungen von hoher Qualität auf einfache Weise möglich.

Bei dem erfindungsgemäßen Sensor können ferner dadurch, dass auf die Verwendung kostenintensiver Edelmetalle vollständig verzichtet werden kann, oder aber dass deren Verwendung zumindest deutlich eingeschränkt werden kann, sowohl die Herstellungskosten eines erfindungsgemäßen Sensors als auch die Kosten des Sensors als solchem erheblich gesenkt werden.

Darüber hinaus kann durch einen Verzicht auf Edelmetalle der Nachteil überwunden werden, dass Edelmetallkontakte, wie insbesondere Platin, bei der Beaufschlagung mit Wasserstoff etwa als zu vermessende Substanz in Luft eine Erwärmung erfahren. Diese Erwärmung liegt insbesondere begründet in einer katalytischen Reaktion, nämlich der Verbrennung des Wasserstoffs zu Wasser. Dies führt zu einer Drift des Messsignales. Folglich kann durch einen erfindungsgemäßen Verzicht auf Edelmetalle als Deckschicht beziehungsweise Deckschichtmatrix, eine derartige Drift verhindert werden, da bei der Beaufschlagung mit Wasserstoff in Luft, beispielsweise, keine störende, katalytische Reaktionswärme freigesetzt wird. Folglich ändert sich die Temperatur des Sensors nicht. Dadurch kann erfindungsgemäß die Messgenauigkeit auch bei sehr langen Messzyklen weiter erhöht werden.

Erfindungsgemäß kann ferner ein weiterer Nachteil insbesondere von Schottkydioden überwunden werden, der durch die Verwendung von Edelmetallkontakten und der damit einhergehenden Wasserbildung, entsteht. Das gebildete Wasser hat nämlich ferner einen Einfluss auf die elektrische Leitfähigkeit der Diode. Dadurch ergibt sich im Stand der Technik das Problem, dass wassersperrende Membranen nur begrenzt oder nicht einsetzbar sind, da das wie oben beschrieben gebildete Reaktionswasser nicht mehr aus dem Inneren des Sensors abdiffundieren könnte. Folglich kann gemäß dem Stand der Technik von außen auf den Sensor wirkende Luftfeuchtigkeit nicht effektiv ausgeschlossen werden. Durch einen Verzicht auf Edelmetallkontakte zwischen Deck- und Mittelschicht durch eine Edelmetallschicht kann erfindungsgemäß daher durch das Ausbleiben der Bildung von Reaktionswasser der Sensor mit feuchtigkeitsabweisenden Membranen ausgestattet werden beziehungsweise umhüllt oder beschichtet werden, welches einen wesentlichen Vorteil, beispielsweise für die Messgenauigkeit, für die Anwendung beispielsweise als Wasserstoffsensor darstellen kann.

Ferner ermöglicht der erfindungsgemäße Sensor gute Messergebnisse bereits bei Raumtemperatur beziehungsweise Umgebungstemperatur, so dass auf ein Aufheizen vollständig verzichtet werden kann. Dadurch ist der erfindungsgemäße Sensor besonders kostengünstig und sicher zu betreiben und bietet ferner Vorteile bei einer Verwendung für mobile Anwendungen. Denn auf teils schwere und raumintensive Energiespeicher kann verzichtet beziehungsweise deren Bedarf stark eingeschränkt werden. Darüber hinaus ist der erfindungsgemäße Sensor durch seinen einfachen Schichtaufbau besonders einfach und kostengünstig herstellbar, was auch den Sensor als solches besonders kostengünstig und damit für weite Anwendungsgebiete wirtschaftlich macht. Die Sandwich-Anordnung der Schichten ermöglicht einen besonders einfachen, robusten und kleinen Aufbau des Sensors. Insbesondere kann die Sensordicke zwischen ≥100µm und ≤ 500µm Mikrometer sein, wobei die Deckschicht eine Dicke aufweisen kann, die in einem Bereich von ≤ 4µm liegt und /oder wobei die Mittelschicht eine Dicke aufweisen kann, die in einem Bereich von ≤ 10µm liegt und /oder wobei die Grundschicht eine Dicke aufweisen kann, die in einem Bereich von ≤ 500µm liegt. Dies ist gegenüber dem Stand der Technik, insbesondere den elektrochemischen Sensoren, ein erheblicher Vorteil. Neben der ausgesprochenen Einfachheit des Schichtaufbaus kann auf diese Weise durch die geringe Dicke und das damit verbundene Potential zur Miniaturisierung eine besonders große Anwendungsvielfalt und Designfreiheit erlaubt werden. Der erfindungsgemäße Sensor ist somit auf einfache Weise unmittelbar als Bauteil in gewünschte Bauelemente integrierbar.

Erfindungsgemäß weißt die Grundschicht ein Metall auf, das ausgewählt ist aus der Gruppe umfassend beziehungsweise bestehend aus Titan, Vanadium, Chrom, Zirconium, Niob, Molybdän, Tantal und Wolfram oder einer Legierung aus einem oder mehrerer dieser Metalle mit einem oder mehrerer dieser oder weiterer Metalle, wie beispielsweise Aluminium, Palladium, Mangan, Eisen, Nickel, Kobalt, Kupfer oder Seltenerdmetallen. Unter den vorgenannten Metallen ist insbesondere Titan von Vorteil. Derartige Substanzen können in einer oxidierenden Atmosphäre spontan eine Konversionsschicht bilden oder insbesondere durch eine elektrochemische Reaktion zur Bildung einer Konversionsschicht angeregt werden, wodurch sie vor einer Oxidation geschützt sind. Daher ist die Grundschicht in dieser Ausgestaltung besonders langlebig. Weiterhin lassen sich mit derartigen Materialien schon in geringen Dicken sehr stabile Schichten ausbilden, so dass weitestgehend auf die Verwendung eines weiteren Trägersubstrats, auf dem die Grundschicht angeordnet ist, verzichtet werden kann.

Erfindungsgemäß ist die Mittelschicht eine Konversionsschicht der Grundschicht. In dieser Ausgestaltung kann der erfindungsgemäße Sensor besonders einfach und kostengünstig hergestellt werden. Beispielsweise kann die Konversionsschicht durch eine elektrochemische Anodisation der Grundschicht, also grundsätzlich durch eine gewollte und insbesondere spezielle und definierte chemische beziehungsweise elektrochemische Behandlung erzeugt werden. Dies ist ein gut beherrschbares, bekanntes, kostengünstiges und auch in großindustriellem Maßstab problemlos verwendbares Verfahren. In diesem Fall wird die Mittelschicht somit aus dem Metalloxid der Grundschicht gebildet. Darüber hinaus ist insbesondere in dieser Ausgestaltung die Mittelschicht besonders porös, in dem die Porenweiten in einem Bereich von ≥ 10nm bis ≤ 5000nm eingestellt werden können und ein besonders guter und großflächiger Kontakt zwischen der Grundschicht und der Mittelschicht vorhanden ist, was die Messergebnisse weiter verbessern kann. Die Einstellung der Porengrößen kann dabei beispielsweise durch die Wahl geeigneter Parameter bei der Auftragung beziehungsweise Erzeugung der Mittelschicht erfolgen. Eine Konversionsschicht kann hier im Sinne der Erfindung insbesondere eine Schicht sein, die durch eine elektrochemische oder chemische insbesondere oxidative Reaktion der Grundschicht in einem Fluid, wie insbesondere einem Gas oder einer Flüssigkeit, erzeugbar ist.

In einer weiteren Ausgestaltung kann die Deckschicht zumindest teilweise aus kolloidalem Graphit hergestellt sein. Insbesondere eine derartige Deckschicht bietet eine gute Leitfähigkeit, die eine hohe Sensitivität und Selektivität des Sensors erlauben kann. Darüber hinaus bietet eine derartige Deckschicht den Vorteil einer leichten und kostengünstigen Aufbringbarkeit und einer hohen Stabilität gegenüber äußeren Einflüssen. Weiterhin kann durch das Verwenden einer aus kolloidalem Graphit erzeugten Deckschicht eine bevorzugte Matrix mit einer für eine Vielzahl von Anwendungen geeigneten insbesondere offenen Porosität geschaffen werden, so dass zum Einen gute Messergebnisse möglich sind durch eine ausgeprägte Diffundierbarkeit der zu vermessenden Substanzen an die Grenzfläche zwischen Mittelschicht und Deckschicht, und ferner der Sensor besonders gut an verschiedenste zu vermessende Substanzen anpassbar ist, wie dies später erläutert wird.

In einer weiteren Ausgestaltung kann die Porenweite der Deckschicht und/oder der Mittelschicht in einem Bereich von ≥ 10nm bis ≤ 5000nm liegen. Dadurch kann erreicht werden, dass eine besonders gute Zugänglichkeit von zu vermessenden Stoffen durch die Deckschicht an die Phasengrenze von Deckschicht und Mittelschicht möglich wird. Ferner kann eine besonders große Sensitivität und Selektivität erzielt werden. Darüber hinaus bietet eine derartige Porenweite eine große Stabilität, so dass die Langlebigkeit der Deckschicht beziehungsweise Mittelschicht und damit des Sensors verbessert werden kann. Die Einstellung der Porosität kann wiederum durch eine geeignete Wahl der Abscheidungsbedingungen beziehungsweise der Bedingungen der Erzeugung der Deckschicht und/oder der Mittelschicht erfolgen.

Erfindungsgemäß weißt der Sensor ein Additiv auf, das zumindest teilweise in den Poren der Deckschicht angeordnet ist. Durch die Anordnung eines derartigen Additivs kann der erfindungsgemäße Sensor auf besonders einfache und effektive Weise an zu vermessende Substanzen angepasst werden, indem etwa die Eigenschaften der Deckschicht gezielt verändert beziehungsweise angepasst werden können. Beispielsweise kann als Additiv dabei eine katalytisch aktive Substanz verwendet werden, welche eine die Leitfähigkeit der Schichtanordnung beeinflussende Reaktion der zu detektierenden Substanz insbesondere an der Grenzfläche zwischen Mittelschicht und Deckschicht katalysiert, so dass der Sensor insbesondere für diese Substanz selektiv wird.

In einer weiteren Ausgestaltung kann das wenigstens eine Additiv ein Edelmetall umfassen beziehungsweise aus diesem bestehen, wie insbesondere Gold, Platin, Palladium, Rhodium, Iridium, Ruthenium oder eine Legierung aus einem oder mehreren der vorgenannten Metalle. Insbesondere derartige Metalle können selektiv als Katalysatoren für definierte zu detektierende Substanzen dienen. Beispielsweise kann mit Goldpartikeln einer Größe, die in einem Bereich von etwa ≥ 2nm bis ≤ 4nm, beispielsweise 3nm liegen kann, Kohlenmonoxid in Luft in einer großen Genauigkeit selektiv nachgewiesen werden.

In einer weiteren Ausgestaltung kann das wenigstens eine Additiv auf einem Trägermaterial, wie beispielsweise auf aktiviertem Kohlenstoff beziehungsweise Aktivkohle, auf gamma-Aluminiumoxid oder auf Titandioxid, angeordnet sein. Dadurch liegt das wenigstens eine Additiv in definierter Form vor, was ebenfalls definierte Messergebnisse und eine verbesserte Messgenauigkeit erlaubt. Darüber hinaus können in dieser Ausgestaltung das beziehungsweise die Additive besonders einfach und verlässlich in den Poren der Deckschicht immobilisiert werden, so dass diese auch nach einer längeren Dauer der Verwendung in den Poren der Deckschicht angeordnet sind. Somit kann auch in dieser Ausgestaltung die Langlebigkeit des Sensors weiter verbessert werden. Ein weiterer Vorteil der Verwendung eines Trägermaterials liegt ferner darin, dass das Additiv in einer Form stabilisiert werden kann, in der sich eine definierte und gewünschte katalytische Aktivität einstellt. Dabei kann das Trägermaterial beispielsweise eine Vickershärte in einem Bereich von ≥ 80 HV10 bis ≤ 150 HV10 aufweisen, wobei die Härte abhängig sein kann von dem verwendeten Material. Im Detail können hier nicht einschränkend geeignet sein Titan mit 150 HV 5/30, Wolfram mit > 500 HV 30, Molybdän mit 200-220 HV30, Chrom mit 1100-1300 HV 30 oder Vanadin mit 80-150 HV10. Dadurch kann das Herstellungsverfahren insbesondere bei der gleichzeitigen Herstellung einer Vielzahl von Sensoren erleichtert werden, da das Trägermaterial etwa eine schneidbare Festigkeit aufweist und nicht gesägt werden muss.

Gegenstand der vorliegenden Erfindung ist ferner ein Verfahren zum Herstellen eines erfindungsgemäßen Sensors, umfassend die Verfahrensschritte:
a) Bereitstellen einer Grundschicht, wobei die Grundschicht ein Metall aufweist,
b) Aufbringen einer Mittelschicht auf zumindest einen Teil der Grundschicht derart, dass die Mittelschicht zumindest teilweise auf der Grundschicht angeordnet ist und mit dieser in Kontakt steht, wobei die Mittelschicht ein Metalloxid aufweist, und
c) Aufbringen einer Deckschicht auf zumindest einen Teil der Mittelschicht derart, dass die Deckschicht zumindest teilweise auf der Mittelschicht angeordnet ist und mit dieser in Kontakt steht, wobei die Deckschicht porös ist und ein Material aufweist, das ausgewählt ist aus der Gruppe umfassend elektrisch leitfähige Kohlenstoffverbindungen wie insbesondere Graphit oder Kohlenstoff-Nanoröhren, organische elektrische Leiter und unedle Metalle, und wobei die Poren der Deckschicht ein Additiv aufweisen.

Das erfindungsgemäße Verfahren umfasst somit im Wesentlichen nur drei Verfahrensschritte, nämlich das Bereitstellen einer Grundschicht, das Aufbringen einer Mittelschicht und das Aufbringen einer Deckschicht. Dadurch ist das Verfahren gemäß der vorliegenden Erfindung besonders einfach, schnell und kostengünstig realisierbar.

Das erfindungsgemäße Verfahren ist dabei gut beherrschbar und auch für eine Serienproduktion gut geeignet.

Nach Fertigstellen von Verfahrensschritt c) ist die Schichtanordnung des Sensors im Wesentlichen fertiggestellt. Damit der Sensor etwa durch Widerstandsmessungen oder durch Leitfähigkeitsmessungen wie gewünscht arbeitet, können insbesondere die Deckschicht und die Grundschicht durch elektrische Anschlüsse elektrisch kontaktiert werden. Beispielsweise kann an der Deckschicht und an der Grundschicht jeweils ein Anschluss vorgesehen sein, der über einen elektrischen Leiter, wie etwa einen dünnen Metalldraht, mit einer Spannungsquelle zum Anlegen einer Spannung verbindbar beziehungsweise verbunden ist. Darüber hinaus kann jeweils ein mit einer Spannungsquelle verbindbarer beziehungsweise verbundener elektrischer Leiter direkt an der Grundschicht beziehungsweise der Deckschicht befestigt, wie etwa angelötet, angebondet, angeschweißt oder angeklebt, werden. Ferner kann zweckmäßigerweise eine Strommessvorrichtung beziehungsweise eine Widerstandsmessvorrichtung vorgesehen sein.

Bezüglich weiterer Vorteile des erfindungsgemäßen Verfahrens beziehungsweise des durch das erfindungsgemäße Verfahren herstellbaren Sensors wird hiermit auf die Ausführungen zu dem erfindungsgemäßen Sensor verwiesen.

Im Rahmen einer bevorzugten Ausgestaltung kann das Verfahren insbesondere bezüglich der Verfahrensschritte a) und b) die Verfahrensschritte umfassen:
d) Bereitstellen eines Elektrolyten;
e) In Kontakt bringen einer Grundschicht mit dem Elektrolyten;
f) In Kontakt bringen einer Elektrode mit dem Elektrolyten, wobei
g) die Grundschicht als Anode und die Elektrode als Kathode geschaltet wird,
h) Anlegen einer Spannung zwischen der Elektrode und der Grundschicht für einen vorbestimmten Zeitraum zum Ausbilden einer Oxidschicht als Mittelschicht;
i) Entfernen der Grundschicht mit der in dem Schritt h) gebildeten Mittelschicht von dem Elektrolyten;
j) Aufbringen einer Deckschicht auf zumindest einen Teil der Mittelschicht.

Durch das erfindungsgemäße Verfahren lässt sich der erfindungsgemäße Sensor in dieser Ausgestaltung besonders einfach und kostengünstig herstellen. Im Detail wird durch elektrochemische Anodisation der Grundschicht die Mittelschicht erzeugt. Dabei wird während der Anodisation das Metall der Grundschicht oxidiert, weshalb das Oxid des entsprechenden Metalls der Grundschicht als Mittelschicht erzeugt wird.

Eine elektrochemische Anodisation ist dabei ein gut beherrschbares und gut definierbares Verfahren, was keine aufwändigen Konstruktionen benötigt. Dadurch lässt sich auf genau definierte Weise eine definierte Konversionsschicht beziehungsweise Mittelschicht auf der Grundschicht aufbringen. Dabei ist das erfindungsgemäße Verfahren durch seine Einfachheit und Kostengünstigkeit auch für Massenproduktionen geeignet und ferner die erzeugten Sensoren für eine besonders große Vielzahl an Anwendungen verwendbar und wirtschaftlich.

Im Detail wird in Schritt d) ein Elektrolyt bereitgestellt. Dies kann beispielsweise eine Lauge oder eine Säure sein. Besonders bevorzugt kann der Elektrolyt eine Säure, wie beispielsweise Schwefelsäure umfassen. Grundsätzlich kann es bevorzugt sein, einen flüssigen Elektrolyten vorzusehen. Dabei kann der Elektrolyt, wie beispielsweise die Schwefelsäure, insbesondere in einem Konzentrationsbereich von ≥ 0,1Mol/Liter bis ≤ 16Mol/Liter, beispielsweise 14Mol/Liter, verwendet werden. Der Elektrolyt kann dabei beispielsweise als ein Elektrolytbad in einem Behältnis, wie etwa einer Wanne, bereitgestellt werden.

Gemäß Schritt e) wird eine Grundschicht mit dem Elektrolyten in Kontakt gebracht. Das bedeutet, dass das Material, welches in dem fertigen Sensor beziehungsweise in der Schichtanordnung des Sensors die Grundschicht bildet, mit dem Elektrolyten in Kontakt gebracht wird, also beispielsweise in dem Elektrolyten angeordnet wird, etwa durch Eintauchen. Beispielsweise kann eine Metallfolie als Grundschicht verwendet werden, also etwa für den Fall der Verwendung von Titan für die Grundschicht, eine Titanfolie oder ein Titanblech mit dem Elektrolyten in Kontakt gebracht, also beispielsweise in den Elektrolyten getaucht werden.

In dem Schritt f) wird gemäß dem erfindungsgemäßen Verfahren in dieser Ausgestaltung eine Elektrode mit dem Elektrolyten in Kontakt gebracht, also ebenfalls beispielsweise in den Elektrolyten eingetaucht. Damit soll im Rahmen der Erfindung insbesondere gemeint sein, dass neben der Grundschicht ein weiteres elektrisch leitfähiges Material, wie beispielsweise eine Graphitelektrode, mit dem Elektrolyten in Kontakt gebracht beziehungsweise in diesen getaucht wird.

Dabei oder in einem weiteren Schritt wird gemäß Schritt g) die Grundschicht als Anode und die Elektrode als Kathode geschaltet. Dies kann beispielsweise erreicht werden, indem bei einem Schritt h) eine Spannung zwischen der Elektrode und der Grundschicht zum Ausbilden einer Oxidschicht als Mittelschicht angelegt wird. Dadurch wird erlaubt, dass sich eine Oxidschicht als Konversionsschicht der Grundschicht durch elektrochemische Anodisation bildet, welche die Mittelschicht ausbildet. Beispielsweise kann eine Spannung in einem Bereich von ≥ 50V bis ≤ 200V, insbesondere 170V angelegt werden.

Ferner wird eine angelegte Spannung gemäß Verfahrensschritt h) für einen vorbestimmten Zeitraum beibehalten. Das soll im Sinne der vorliegenden Erfindung insbesondere bedeuten, dass über einen definierten Zeitraum, wie etwa eine Stunde, eine Spannung in beliebiger Größe aufrechterhalten wird, wobei sich die Größe der Spannung beispielsweise während des Verfahrensschrittes h) ändern kann, oder auch konstant gehalten werden kann. Durch das Beibehalten einer angelegten Spannung wird somit eine wachsende Konversionsschicht beziehungsweise Mittelschicht aufgebracht. Die Dicke der aufgebrachten Konversionsschicht beziehungsweise Mittelschicht ist dabei beispielsweise korrespondierend zu der Dauer der angelegten Spannung und damit der Dauer des fließenden Stroms und zu der Größe des fließenden Stroms.

Es ist ersichtlich, dass gemäß dem vorbeschriebenen Verfahren in dieser Ausgestaltung die gesamte Oberfläche der Grundschicht konvertiert wird beziehungsweise mit einer Mittelschicht bedeckt werden kann. Für den Fall, dass etwa definierte Strukturen einer Mittelschicht vorgesehen sein sollen, kann die Grundschicht, etwa durch das Vorsehen von entsprechenden Masken, vor einer ganzheitlichen Konversion geschützt werden, um so etwa die gewünschte Struktur zu erzeugen.

Grundsätzlich ist das vorbeschriebene Verfahren ein sogenanntes PEO-Verfahren (plasma electrolytic oxidation). Bei diesem Verfahren treten elektrische Entladungen auf, die zu einem Auftreten von gasförmigem Sauerstoff führen können, was die Anodisation begünstigt beziehungsweise ermöglicht. Somit kann erfindungsgemäß insbesondere eine plasmaelektrolytische Herstellung der Mittelschicht stattfinden, welche insbesondere bei angelegten Spannungen von ≥ 50V, vorzugsweise von ≥ 100V realisiert werden kann. Dadurch wird ein Verfahren zur Herstellung der Schichtanordnung für den erfindungsgemäßen Sensor verwendet, bei welchem an der Grundschicht lokal sehr hohe Temperaturen und Partialdrücke, etwa von Sauerstoff, auftreten, was ein besonders effektives Verfahren erlaubt. In dieser Ausgestaltung werden somit elektrische Entladungen unter Funkenbildung gezielt eingesetzt.

Vorteilhaft bei dem in dieser Ausgestaltung angewandten Verfahren der Anodisation ist ferner, dass zwischen der Mittelschicht und der Grundschicht ein sehr inniger Kontakt entsteht, der das Messverhalten des Sensors positiv beeinflusst.

Insbesondere während des Verfahrensschritts h) kann die Stromdichte des fließenden Stroms in einer vorteilhaften Ausgestaltung auf einen Bereich von ≤ 200mAcm⁻² begrenzt sein beziehungsweise werden. Beispielsweise kann für ein Elektrolytgefäß von 50ml und einer Grundschicht der Größe 5mm x 5mm ein maximaler Strom von 200mA vorteilhaft sein. Dabei kann der Strom insbesondere am Anfang der Anodisation begrenzt sein. Die Spannung kann im Verlaufe der Anodisation erhöht werden, wenn der fließende Strom fällt, so dass der Anodisationsstrom konstant bleibt. Eine derartige Strombegrenzung kann insbesondere der Begrenzung der Erwärmung des Elektrolyten dienen, welche beispielsweise durch die elektrische Entladung entstehen kann. Dadurch kann die Genauigkeit der Steuerung des Anodisationsprozesses durch im Wesentlichen konstante Temperaturen verbessert werden.

Diesbezüglich kann es in einer weiteren Ausgestaltung vorteilhaft sein, dass der Elektrolyt insbesondere während des Schrittes h) gekühlt wird. Beispielsweise kann der Elektrolyt, etwa unter Verwendung eines Rührers wie eines Magnetrührers, gerührt werden, oder es können Kühleinrichtungen, wie beispielsweise ein externer Umwälzkühler, eingesetzt werden. Dadurch können ebenfalls die obengenannten bezüglich einer konstanten Anodisationstemperatur genannten Vorteile erzielt werden.

Dies kann ferner dadurch möglich sein, entsprechend große Elektrolytbäder vorzusehen, in denen die Anodisation durchgeführt wird. Beispielsweise kann das Volumen des Elektrolytbades größer als 200ml/cm² Fläche der Grundschicht betragen.

Nach dem Ende der Konversion beziehungsweise dem Aufbringen der Mittelschicht kann gemäß Verfahrens schritt i) die Grundschicht mit der in dem Schritt h) gebildeten Mittelschicht von dem Elektrolyten entfernt werden. Beispielsweise kann die Anordnung aus Grundschicht und Mittelschicht aus einer Elektrolytflüssigkeit entnommen werden. Zweckmäßigerweise kann die von dem Elektrolyten entfernte Schichtanordnung, etwa durch destilliertes Wasser, von dem Elektrolyten gereinigt werden. Anschließend kann die Schichtanordnung getrocknet werden, beispielsweise durch eine Temperaturbehandlung bei etwa 400°C, beispielsweise für eine Dauer von 20s.

In einem nächsten Schritt wird in dieser Ausgestaltung gemäß Verfahrensschritt j) die Deckschicht auf zumindest einen Teil der Mittelschicht aufgebracht. Dies kann auf verschiedenste Weise erfolgen. Für den Fall des Auftragens einer kolloidalen Graphitschicht, beispielsweise, kann diese etwa durch einen Sprühauftrag oder durch einen Druckvorgang aufgetragen werden. Grundsätzlich sind jedoch sämtliche Verfahren möglich, mit welchen die entsprechende Deckschicht auf zumindest einen Teil der Mittelschicht aufgebracht beziehungsweise aufgetragen werden kann. Die aufgebrachte Deckschicht kann dann in geeigneter Weise, wenn dies notwendig ist, etwa durch Trocknen, Sintern oder Ähnliches nachbehandelt werden.

Nach Fertigstellen von Verfahrensschritt j) ist die Schichtanordnung des Sensors im Wesentlichen fertiggestellt. Damit der Sensor, etwa durch Widerstandsmessungen oder durch Leitfähigkeitsmessungen, wie gewünscht arbeitet, können wiederum insbesondere die Deckschicht und die Grundschicht durch elektrische Anschlüsse elektrisch kontaktiert werden. Beispielsweise kann an der Deckschicht und an der Grundschicht jeweils ein Anschluss vorgesehen sein, die über einen elektrischen Leiter, wie etwa einen dünnen Metalldraht, mit einer Spannungsquelle zum Anlegen einer Spannung verbindbar beziehungsweise verbunden ist. Darüber hinaus kann jeweils ein mit einer Spannungsquelle verbindbarer beziehungsweise verbundener elektrischer Leiter direkt an der Grundschicht beziehungsweise der Deckschicht befestigt, wie etwa angelötet, angebondet, angeschweißt oder angeklebt, werden. Ferner kann zweckmäßigerweise eine Strommessvorrichtung beziehungsweise eine Widerstandsmessvorrichtung vorgesehen sein, um eine Detektion von zu vermessenden Substanzen durchführen zu können.

Dabei ist für den Fachmann ersichtlich, dass die vorgenannten Verfahrensschritte nacheinander oder zeitgleich durchgeführt werden können.

Im Rahmen einer weiteren Ausgestaltung kann in Schritt a) eine Mehrzahl an aneinander befestigten Grundschichteinheiten bereitgestellt werden, wobei in den Schritten b) und c) eine Mehrzahl an Sensoreinheiten ausgebildet wird und wobei die einzelnen Sensoreinheiten nach dem Verfahrensschritt c) insbesondere durch ein Schneidwerkzeug vereinzelt werden. Dies ist ein besonders zeiteffizientes und kostengünstiges Verfahren, um eine Mehrzahl an Sensoreinheiten beziehungsweise Sensoren herstellen zu können.

Dabei kann eine Grundschichteinheit im Sinne der vorliegenden Erfindung insbesondere ein Bereich einer Grundschicht sein, der als alleinige Grundschicht einer zu erzeugenden Sensoreinheit beziehungsweise eines Sensors dient. Eine Grundschichteinheit kann dazu von weiteren Grundschichteinheiten im Wesentlichen getrennt sein, und lediglich durch einen Steg oder ein ähnliches Verbindungsmittel miteinander verbunden sein. Ferner können die Grundschichteinheiten vollständig aneinander befestigt sein. Dabei können die einzelnen Grundschichteinheiten etwa durch eine Nut angedeutet beziehungsweise begrenzt sein oder auch markierungslos ineinander übergehen.

Das erfindungsgemäße Verfahren kann in dieser Ausgestaltung mit sämtlichen Grundschichteinheiten gemeinsam durchgeführt werden, so dass die Verfahrensschritte b) und c) gemeinsam durchlaufen werden. Dadurch bildet sich eine Mehrzahl an Sensoreinheiten aus, deren Größe und Geometrie im Wesentlichen durch die Grundschichteinheiten vorgegeben sein kann. Die einzelnen Sensoreinheiten können dann nach dem Verfahrensschritt c) vereinzelt werden. Dazu kann insbesondere ein Schneidwerkzeug vorteilhaft sein, welches etwa die Stege oder Nuten durchtrennt. Ferner können jedoch auch weitere Vereinzelungsvorrichtungen, wie etwa Sägevorrichtungen, grundsätzlich verwendet werden.

Gegenstand der vorliegenden Erfindung ist ferner die Verwendung eines erfindungsgemäßen Sensors als Gassensor und/oder als Flüssigkeitssensor. Der erfindungsgemäße Sensor kann beispielsweise Verwendung finden, um Substanzen, wie etwa gasförmige Stoffe oder Flüssigkeiten, in einem Gas oder Gasgemisch zu detektieren. Darüber hinaus kann der erfindungsgemäße Sensor etwa Verwendung finden, um Substanzen, wie etwa Flüssigkeiten oder Gase, in Flüssigkeiten beziehungsweise Flüssigkeitsgemischen zu detektieren. Als nicht beschränkendes Beispiel sei hier die Anwendung in einem organischen Lösungsmittel, etwa zur Überwachung der Restfeuchte oder von gelösten Gasen, genannt. Durch eine geeignete Wahl der Komponenten der Schichtanordnung des erfindungsgemäßen Sensors ist dieser problemlos auch für einen Langzeiteinsatz in verschiedensten Gasen wie auch Flüssigkeiten geeignet.

Grundsätzlich kann dabei das spezielle Anwendungsgebiet des Sensors abhängig sein von der Ausgestaltung des Sensors beziehungsweise von der Reaktivität der Deckschicht.

Bezüglich weiterer Vorteile des Sensors auch als Gassensor und/oder Flüssigkeitssensor wird auf die obigen Ausführungen bezüglich des erfindungsgemäßen Sensors verwiesen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können, und wobei die Erfindung nicht auf die folgenden Zeichnungen und die folgende Beschreibung beschränkt ist.

Es zeigen:
- Fig. 1: eine schematische Darstellung einer Ausführungsform eines erfindungsgemäßen Sensors;
- Fig. 2a: ein Diagramm exemplarisch zeigend den durch eine Ausführungsform des Sensors fließenden Strom als Funktion der Zeit bei einer Variation der gemessenen relativen Luftfeuchte;
- Fig. 2b: eine vergrößerte Ansicht eines Teilbereichs aus von Fig. 2a;
- Fig. 3: ein Diagramm exemplarisch zeigend den durch eine Ausführungsform des Sensors fließenden Strom als Funktion der Zeit bei einer Variation der gemessenen Wasserstoffkonzentration in Luft;
- Fig. 4: ein Diagramm exemplarisch zeigend eine Kennlinie einer Ausführungsform des erfindungsgemäßen Sensors, und
- Fig. 5: eine schematische Ansicht einer Mehrzahl an Grundschichteinheiten zur Herstellung einer Vielzahl von erfindungsgemäßen Sensoren.

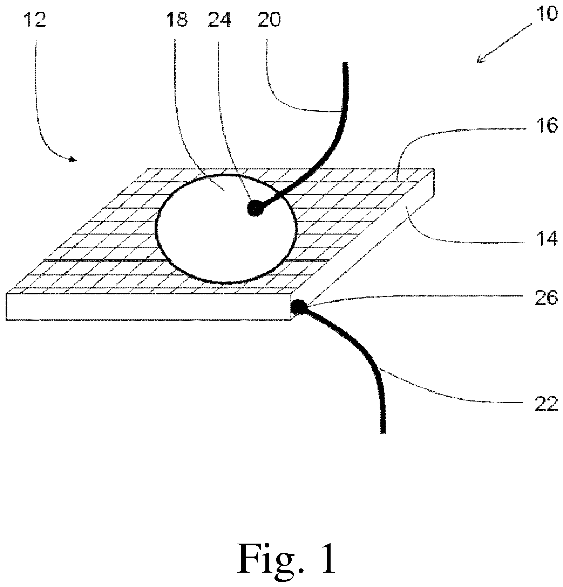

In Figur 1 ist eine schematische Ausführungsform eines erfindungsgemäßen Sensors 10 gezeigt. Ein derartiger Sensor 10 kann Verwendung finden in sämtlichen Anwendungen, in denen eine zu detektierende Substanz, wie insbesondere ein zu messendes Gas oder eine zu messende Flüssigkeit, ermittelt werden soll. Als beispielhafte Anwendung sei hier die Verwendung der Luftüberwachung, etwa bezüglich Kohlenmonoxid oder Heizgas beziehungsweise Kochgas zu nennen, wie etwa für Privathaushalte oder industrielle Anlagen. Ferner können Umweltschadstoffe in der Luft gemessen werden. Für den rein beispielhaft und nicht beschränkenden Fall eines Wasserstoffsensors kann dieser etwa Verwendung finden bei einem mit Wasserstoff betriebenen Fahrzeug, im Bereich von Wasserstoff-Tanks, in der Umgebung von Wasserstoffleitungen oder etwa in Zusammenhang mit dem Betreiben von Brennstoffzellen. Darüber hinaus kann der Sensor 10 allgemein etwa zur Reaktionsüberwachung oder zur Überwachung von Laboren oder industriellen Prozessen geeignet sein. Insbesondere kann der erfindungsgemäße Sensor als Gassensor und/oder als Flüssigkeitssensor verwendet werden. Dabei kann rein beispielhaft das Messen von Gasen wie Wasserstoff oder Ozon oder auch von Feuchte vorteilhaft sein. Auch Anwendungen zur Detektion von Alkoholen, wie etwa als Alkometer, sind denkbar. Die genaue Anwendung kann dabei insbesondere abhängig sein von der Ausbildung des Sensors 10.

Der Sensor 10 gemäß Figur 1 umfasst eine Schichtanordnung 12. Die Schichtanordnung 12 weist dabei wenigstens eine Grundschicht 14, eine Mittelschicht 16 und eine Deckschicht 18 auf. In Figur 1 ist dabei zu erkennen, dass die Mittelschicht 16 zumindest teilweise auf der Grundschicht 14 angeordnet ist und mit dieser in Kontakt steht und die Deckschicht 18 zumindest teilweise auf der Mittelschicht 16 angeordnet ist und mit dieser in Kontakt steht. Dabei kann die Mittelschicht 16 die Grenzschicht 14 vollständig oder teilweise abdecken. Weiterhin kann die Deckschicht 18 die Mittelschicht 16 vollständig oder teilweise abdecken. Bevorzugt ist die Deckschicht 18 etwas kleiner als die Mittelschicht 16. Beispielsweise kann, etwa bei einer Fläche der Mittelschicht 16 von 5mm x 5mm jeweils ein Rand von 500µm vorgesehen sein. Dadurch kann beispielsweise das Herstellungsverfahren, etwa bei dem Schneiden eines großflächigen Bereichs zur Herstellung kleinerer Sensoreinheiten beziehungsweise Sensoren 10, verbessert beziehungsweise die Funktionstätigkeit des Sensors 10 nach dem Schneiden sichergestellt werden.

Die Grundschicht 14 weist ein Metall auf, das ausgewählt sein kann aus der Gruppe umfassend Titan, Vanadium, Chrom, Zirconium, Niob, Molybdän, Tantal und Wolfram oder einer Legierung aus einem oder mehrerer dieser Metalle mit einem oder mehrerer dieser oder weiterer Metalle, wie beispielsweise Aluminium, Palladium, Mangan, Eisen, Nickel, Kobalt, Kupfer oder Seltenerdmetallen. Die Mittelschicht 16 weist ein insbesondere poröses Metalloxid auf, das vorzugsweise eine Konversionsschicht der Grundschicht 14 sein kann und/oder eine Porenweite in einem Bereich von ≥10nm bis ≤ 5000nm aufweisen kann. Die Deckschicht 18 ist porös und kann Porenweiten in einem Bereich von ≥ 10nm bis ≤ 5000m aufweisen. Die Deckschicht 18 weist ferner ein Material auf, das ausgewählt ist aus der Gruppe umfassend elektrisch leitfähige Kohlenstoffverbindungen wie insbesondere Graphit oder Kohlenstoff-Nanoröhren, organische elektrische Leiter und unedle Metalle, insbesondere umfassend eine Konversionsschicht beziehungsweise Passivierungsschicht. Insbesondere ist die Deckschicht 18 zumindest teilweise aus kolloidalem Graphit hergestellt.

Der erfindungsgemäße Sensor 10 weißt ein Additiv auf, das zumindest teilweise in den Poren der Deckschicht 18 angeordnet ist. Dabei kann das wenigstens ein Additiv ein Edelmetall umfassen, wie insbesondere Gold, Platin, Palladium, Rhodium, Iridium, Ruthenium oder eine Legierung aus einem oder mehreren der vorgenannten Metalle. Bezüglich des wenigstens einen Additivs kann dieses bevorzugt auf einem Trägermaterial, wie beispielsweise auf aktiviertem Kohlenstoff, auf gamma-Aluminiumoxid oder auf Titandioxid, angeordnet sein.

Um dem Sensor 10 seine Funktion verleihen zu können, sind die Grundschicht 14 und die Deckschicht 18 für eine Leitfähigkeitsmessung und/oder eine Widerstandsmessung elektrisch kontaktierbar. Dazu kann beispielsweise jeweils ein elektrischer Leiter 20, 22, etwa über eine Lötstelle 24, 26, an der Grundschicht 14 beziehungsweise an der Deckschicht 18 befestigt sein. Ferner kann der Sensor 10 beispielsweise mit einer einem Widerstandsmessgerät und/oder einem Leitfähigkeitsmessgerät sowie einer elektronischen Auswerteeinheit verbunden sein, welche die zu vermessende Gas- oder Flüssigkeitskonzentration anhand der ermittelten Daten auswertet.

Der Messbereich einer Ausführungsform eines erfindungsgemäßen Sensors 10, dessen Frontelektrode beziehungsweise Deckschicht 18 aus einer Schicht aus kolloidalem Graphit der Bezeichnung Aquadag 18% von HENKEL NEDERLAND BV besteht, kann für Wasserstoff 0,5% bis mindestens zur unteren Explosionsgrenze in Luft betragen, wenn er mit einer Spannung von 3,5V betrieben wird. Der Messbereich des Sensors 10, dessen Frontelektrode beziehungsweise Deckschicht 18 aus einer Schicht aus kollodialem Graphit der Bezeichnung Aquadag 18% von HENKEL NEDERLAND BV besteht, weist in Bezug auf Änderungen der relativen Feuchte in Luft einen Messbereich von 0% bis 100% bei Raumtemperatur auf, wenn er bei einer Spannung von 100mV betrieben wird. Die Ansprechzeiten t90 können kleiner sein als 45s für Wasserstoff und kleiner als 6s für Feuchte; die Abklingzeiten können kleiner sein als 3s für Wasserstoff und kleiner als 20s für Feuchte. Es ist somit zu erkennen, dass der erfindungsgemäße Sensor 10 sehr exakte Messergebnisse schon bei Raumtemperatur beziehungsweise Umgebungstemperatur liefern kann.

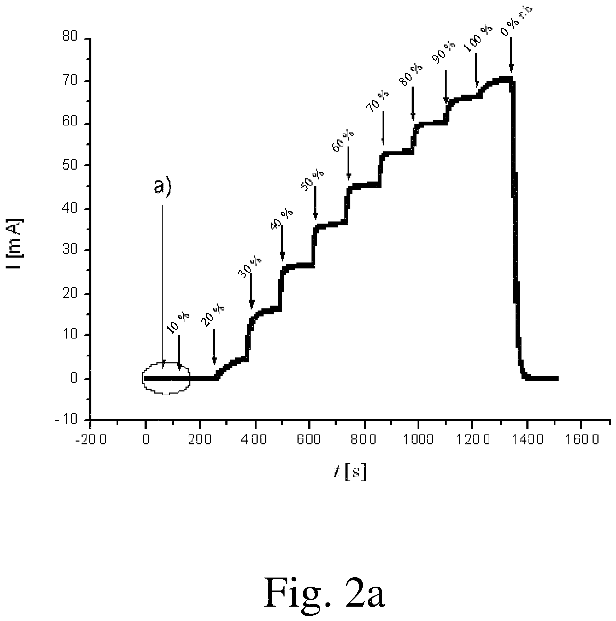

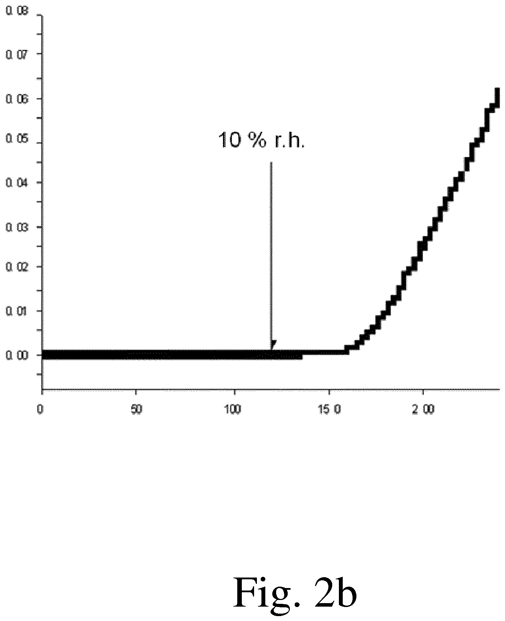

In Figur 2 ist ein Diagramm gezeigt, welches den Strom I durch eine Ausführungsform des Sensors 10 als Funktion der Zeit t bei einer Variation der relativen Luftfeuchte (r.h., relative humidity) zeigt, wobei der Sensor 10 somit insbesondere selektiv für Luftfeuchte ist. Der in der Figur 2b vergrößert dargestellte Ausschnitt der Figur 2a, der in Figur 2a mit a) gekennzeichnet ist, zeigt dabei eine Vergrößerung in einem Bereich von 0 bis 200 Sekunden. Es ist zu erkennen, dass der Sensor 10 schon nach geringer Ansprechzeit die vorliegende Feuchte detektiert und dabei einen Messbereich von im Wesentlichen 0% bis 100 % Feuchte aufweist. Dabei ist die Feuchte anhand einer Strommessung detektierbar.

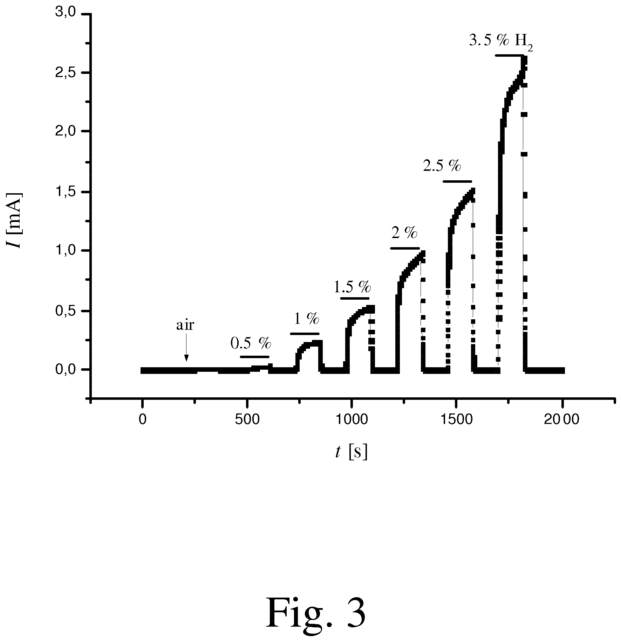

Figur 3 zeigt ein Diagramm darstellend den Strom I durch eine Ausführungsform des Sensors 10 als Funktion der Zeit t bei einer Variation der Wasserstoff-Konzentration (x% H₂) in Luft (air). Auch in dieser Figur ist erkennbar, dass bereits nach kurzen Ansprechzeiten schon geringe Wasserstoffkonzentrationen, die für eine Vielzahl an Anwendungen ausreichend sind, durch eine Strommessung detektierbar sind.

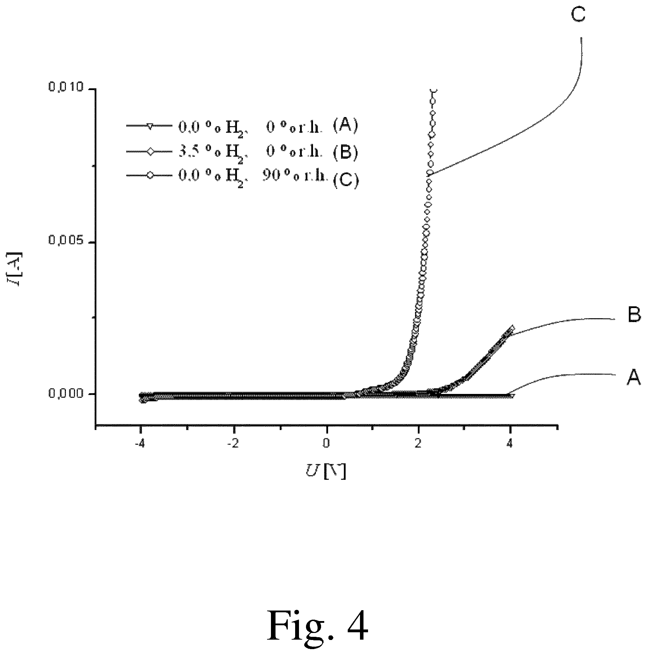

Figur 4 zeigt eine Kennlinie einer Ausführungsform eines Sensors 10 mit einer Deckschicht 18 aus Graphit. Im Detail ist in Figur 4 der Strom I aufgetragen gegen die Spannung U. Die Kurve A zeigt eine Messung in Abwesenheit von H₂ und Feuchte in Luft, die Kurve B zeigt die Kennlinie bei 3,5 % H₂ und 0% relativer Feuchte und die Kurve C zeigt die Kennlinie bei 0,0% H₂ und 90% relativer Feuchte. Aus dem Diagramm gemäß Figur 4 ist ersichtlich, dass durch eine Variation der Spannung selektiv Wasserstoff und Feuchte unabhängig voneinander und nebeneinander durch eine Strommessung detektierbar sind.

Ein Herstellungsverfahren kann insbesondere die folgenden Verfahrensschritte umfassen.
a) Bereitstellen einer Grundschicht 14, wobei die Grundschicht 14 ein Metall aufweist,
b) Aufbringen einer Mittelschicht 16 auf zumindest einen Teil der Grundschicht 14 derart, dass die Mittelschicht 16 zumindest teilweise auf der Grundschicht 14 angeordnet ist und mit dieser in Kontakt steht, wobei die Mittelschicht 14 ein Metalloxid aufweist, und
c) Aufbringen einer Deckschicht 18 auf zumindest einen Teil der Mittelschicht 16 derart, dass die Deckschicht 18 zumindest teilweise auf der Mittelschicht 16 angeordnet ist und mit dieser in Kontakt steht, wobei die Deckschicht 18 porös ist und ein Material aufweist, das ausgewählt ist aus der Gruppe umfassend elektrisch leitfähige Kohlenstoffverbindungen wie insbesondere Graphit oder Kohlenstoff-Nanoröhren, organische elektrische Leiter und unedle Metalle, und wobei die Poren der Deckschicht ein Additiv aufweisen.

Besonders bevorzugt kann ein Verfahren zur Herstellung eines erfindungsgemäßen Sensors 10 die folgenden Schritte umfassen:
d) Bereitstellen eines Elektrolyten;
e) In Kontakt bringen einer Grundschicht 14 mit dem Elektrolyten;
f) In Kontakt bringen einer Elektrode mit dem Elektrolyten, wobei
g) die Grundschicht 14 als Anode und die Elektrode als Kathode geschaltet wird,
h) Anlegen einer Spannung zwischen der Elektrode und der Grundschicht 14 für einen vorbestimmten Zeitraum zum Ausbilden einer Oxidschicht als Mittelschicht 16;
i) Entfernen der Grundschicht 14 mit der in dem Schritt h) gebildeten Mittelschicht von dem Elektrolyten;
j) Aufbringen einer Deckschicht 18 auf zumindest einen Teil der Mittelschicht 16.

Dabei kann als Elektrolyt eine Lauge oder eine Säure, insbesondere eine Säure, in einem Konzentrationsbereich von ≥ 0,1Mol/Liter bis ≤ 16Mol/Liter, verwendet werden und/oder es kann eine Spannung in einem Bereich von ≥ 50V bis ≤ 200V, insbesondere 170V angelegt werden. Um eine Kühlung des Elektrolyten zu erreichen, kann die Stromdichte des fließenden Stroms auf einen Bereich von ≤ 200mAcm⁻² begrenzt werden und/oder kann der Elektrolyt während des Schritts h) gekühlt werden.

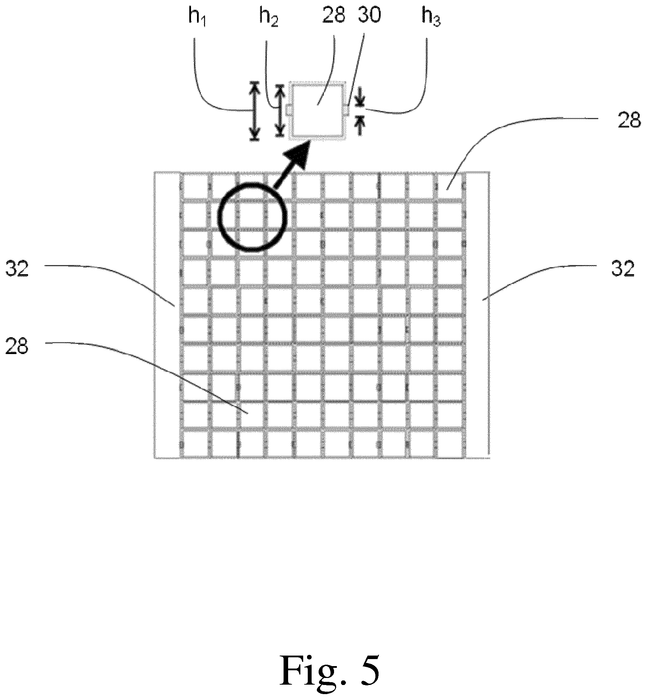

Bevorzugt können in Schritt a) eine Mehrzahl an aneinander befestigten Grundschichteinheiten 28 bereitgestellt werden, wobei in den Schritten b) und c) eine Mehrzahl an Sensoreinheiten beziehungsweise Sensoren 10 ausgebildet werden und wobei die einzelnen Sensoreinheiten nach dem Verfahrensschritt c) insbesondere durch ein Schneidwerkzeug vereinzelt werden. Dies ist in Figur 5 dargestellt.

In Figur 5 ist eine Mehrzahl an Grundschichteinheiten 28, etwa in einer Anzahl von hundert, gezeigt, die beispielsweise als Folie ausgebildet sind und als Vorstufe für Sensoreinheiten beziehungsweise Sensoren 10 dienen können. Die einzelnen Grundschichteinheiten 28 sind gemäß Figur 5 über seitliche Stege 30 untereinander und mit Fixierstreifen 32 verbunden. Die Fixierstreifen 32 dienen insbesondere zum Halten beziehungsweise Manipulieren der Anordnung aus Grundschichteinheiten 28 in einer Prozessanlage und zur Stromzuführung in einer Plasmaelektrolyse-Oxidations-Zelle. Ferner kann eine Grundschichteinheit 28 eine Dimension von beispielsweise 4,5mm x 4,5mm aufweisen (h₂), wohingegen der Steg 30 ein Breite von etwa 1mm aufweisen kann (h₃). Als h₁ wird gemäß Figur 6 eine sich wiederholende Einheit beschrieben, welche neben der eigentlichen Grundschichteinheit 28 jeweils die Hälfte eines Spaltes an allen Seiten der Grundschichteinheit 28 umfasst. Diese Größe h₁ kann etwa 5mm betragen, was bedeutet, so dass der Spalt auf jeder Seite etwa eine Dicke von 0,5mm aufweisen kann.

Ein erfindungsgemäßes Verfahren in dieser Ausgestaltung kann dann wie folgt ablaufen. Beispielsweise in einem Halterahmen fixiert können die Grundschichteinheiten 28 etwa über einen 5-Achsen-Bewegungsmanipulator in eine PEO-Zelle (Plasmaelektrolyse-Oxidations-Zelle) transportiert und dort unter Kontrolle von Strom, Spannung und Zeit oxidiert werden. Im nächsten Prozessschritt werden die vorstrukturierten Grundschichteinheiten 28 ultraschallgereinigt, um den anhaftenden Elektrolyten aus der PEO-Zelle zu entfernen. In einem Ofen werden die oxidierten Einheiten anschließend getrocknet und thermisch nachbehandelt. Im folgenden Schritt werden sie beispielsweise zu einer Sprühbeschichtungs-Zelle transportiert beziehungsweise manipuliert, in der die Frontelektrode beziehungsweise Deckschicht 18 erzeugt wird. Die Sensoren sind dann in ihrer Struktur fertiggestellt. In der Anlage kann zusätzlich eine Testvorrichtung für eine stichprobenartige Bestimmung elektrischer Kenndaten einzelner Sensorelemente beziehungsweise Sensoren 10 implementiert sein. Der Tester dient damit einer ersten Kontrolle der prinzipiellen Funktionsfähigkeit der Sensorelemente.

Die anschließende Vereinzelung der Sensoren 10 kann durch ein Schneidwerkzeug erfolgen, in dem die kleinen seitlichen Stege 30 an den fertiggestellten Sensorelementen beziehungsweise Sensoren 10 durchschnitten werden; an diesen Stellen entstehen vorteilhafterweise die elektrischen Kontakte für nachfolgende Verklebung mit einem Silikonleitkleber oder einem anderen leitfähigen Kleber auf einen Sockel. Als Sockel kann ein sogenannter TO-39-Sockel, der für elektronische Bauelemente kommerziell verfügbar ist, verwendet werden. Die Frontelektrode beziehungsweise Deckschicht 18 kann etwa über eine Drahtbrücke aus vergoldetem Kupfer mit dem zweiten isoliertem Kontakt-Pin des Sockels elektrisch leitend verklebt werden.

## Patentansprüche

1. Sensor mit einer Schichtanordnung (12), wobei die Schichtanordnung (12) wenigstens eine Grundschicht (14), eine Mittelschicht (16) und eine Deckschicht (18) aufweist, wobei die Mittelschicht (16) zumindest teilweise auf der Grundschicht (14) angeordnet ist und mit dieser in Kontakt steht und wobei die Deckschicht (18) zumindest teilweise auf der Mittelschicht (16) angeordnet ist und mit dieser in Kontakt steht, wobei die Grundschicht (14) ein Metall aufweist, wobei die Mittelschicht (16) ein Metalloxid aufweist, und wobei die Deckschicht (18) porös ist und ein Material aufweist, das ausgewählt ist aus der Gruppe umfassend elektrisch leitfähige Kohlenstoffverbindungen, wie insbesondere Graphit oder Kohlenstoff-Nanoröhren, organische elektrische Leiter und unedle Metalle, und wobei die Grundschicht (14) und die Deckschicht (18) für eine Leitfähigkeitsmessung und/oder eine Widerstandsmessung elektrisch kontaktierbar sind, wobei die Grundschicht (14) wenigstens ein Metall aufweist, das ausgewählt ist aus der Gruppe umfassend Titan, Vanadium, Chrom, Zirconium, Niob, Molybdän, Tantal und Wolfram oder einer Legierung aus einem oder mehrerer dieser Metalle mit einem oder mehrerer dieser oder weiterer Metalle und wobei die Mittelschicht (16) eine Konversionsschicht der Grundschicht (14) ist, **dadurch gekennzeichnet, dass** der Sensor (10) wenigstens ein Additiv aufweist, das zumindest teilweise in den Poren der Deckschicht (18) angeordnet ist und das dazu dient, den Sensor an zu vermessende Substanzen anzupassen.

2. Sensor nach Anspruch 1, **dadurch gekennzeichnet, dass** die Deckschicht (18) zumindest teilweise aus kolloidalem Graphit hergestellt ist.

3. Sensor nach einem der Ansprüche 1 oder 2, **dadurch gekennzeichnet, dass** die Porenweiten der Deckschicht (18) und/oder der Mittelschicht (16) in einem Bereich von ≥ 10nm bis ≤ 5000nm liegen.

4. Sensor nach einem der Ansprüche 1-3, wobei das wenigstens eine Additiv ein Edelmetall umfasst, wie insbesondere Gold, Platin, Palladium, Rhodium, Iridium, Ruthenium oder eine Legierung aus einem oder mehreren der vorgenannten Metalle.

5. Sensor nach Anspruch 1 oder 4, **dadurch gekennzeichnet, dass** das wenigstens eine Additiv auf einem Trägermaterial, wie beispielsweise auf aktiviertem Kohlenstoff, auf gamma-Aluminiumoxid oder auf Titandioxid, angeordnet ist.

6. Verfahren zum Herstellen eines Sensors (10) nach einem der Ansprüche 1 bis 5, umfassend die Verfahrensschritte:
a) Bereitstellen einer Grundschicht (14), wobei die Grundschicht (14) ein Metall aufweist,
b) Aufbringen einer Mittelschicht (16) auf zumindest einen Teil der Grundschicht (14) derart, dass die Mittelschicht (16) zumindest teilweise auf der Grundschicht (14) angeordnet ist und mit dieser in Kontakt steht, wobei die Mittelschicht (14) ein Metalloxid aufweist, und
c) Aufbringen einer Deckschicht (18) auf zumindest einen Teil der Mittelschicht (16) derart, dass die Deckschicht (18) zumindest teilweise auf der Mittelschicht (16) angeordnet ist und mit dieser in Kontakt steht, wobei die Deckschicht (18) porös ist und ein Material aufweist, das ausgewählt ist aus der Gruppe umfassend elektrisch leitfähige Kohlenstoffverbindungen, wie insbesondere Graphit oder Kohlenstoff-Nanoröhren, organische elektrische Leiter und unedle Metalle, und wobei die Poren der Deckschicht (18) ein Additiv aufweisen, das dazu dient den Sensor an zu vermessende Substanzen anzupassen.

7. Verfahren nach Anspruch 6, umfassend die Verfahrensschritte:
d) Bereitstellen eines Elektrolyten;
e) In Kontakt bringen einer Grundschicht (14) mit dem Elektrolyten;
f) In Kontakt bringen einer Elektrode mit dem Elektrolyten, wobei
g) die Grundschicht (14) als Anode und die Elektrode als Kathode geschaltet wird,
h) Anlegen einer Spannung zwischen der Elektrode und der Grundschicht (14) für einen vorbestimmten Zeitraum zum Ausbilden einer Oxidschicht als Mittelschicht (16);
i) Entfernen der Grundschicht (14) mit der in dem Schritt h) gebildeten Mittelschicht von dem Elektrolyten;
j) Aufbringen einer Deckschicht (18) auf zumindest einen Teil der Mittelschicht (16).

8. Verfahren nach Anspruch 7, **dadurch gekennzeichnet, dass** als Elektrolyt eine Lauge oder eine Säure, insbesondere eine Säure, in einem Konzentrationsbereich von ≥ 0,1 Mol/Liter bis ≤ 16Mol/Liter, verwendet wird.

9. Verfahren nach Anspruch 7 oder 8, **dadurch gekennzeichnet, dass** eine Spannung in einem Bereich von ≥ 50V bis ≤ 200V, insbesondere 170V angelegt wird.

10. Verfahren nach einem der Ansprüche 7 bis 9, **dadurch gekennzeichnet, dass** der Elektrolyt während des Schritts h) gekühlt wird.

11. Verfahren nach einem der Ansprüche 6 bis 10, **dadurch gekennzeichnet, dass** in Schritt a) eine Mehrzahl an aneinander befestigten Grundschichteinheiten bereitgestellt wird, wobei in den Schritten b) und c) eine Mehrzahl an Sensoreinheiten ausgebildet wird und wobei die einzelnen Sensoreinheiten nach dem Verfahrensschritt c) insbesondere durch ein Schneidwerkzeug vereinzelt werden.

12. Verwendung eines Sensors (10) nach einem der Ansprüche 1 bis 5 als Gassensor und/oder als Flüssigkeitssensor.

## Claims

1. Sensor with a layer arrangement (12), wherein the layer arrangement (12) comprises at least one base layer (14), an intermediate layer (16) and a cover layer (18), wherein the intermediate layer (16) is at least partially arranged on the base layer (14) and is in contact therewith, and wherein the cover layer (18) is at least partially arranged on the intermediate layer (16) and is in contact therewith, wherein the base layer (14) comprises a metal, the intermediate layer (16) comprises a metal oxide, and wherein the cover layer (18) is porous and comprises a material which is selected from the group consisting of electrically conductive carbon compounds, such as in particular graphite or carbon nanotubes, organic electrical conductors and base metals, and wherein the base layer (14) and the cover layer (18) are electrically contactable for a conductivity measurement and/or a resistance measurement, wherein the base layer (14) comprises at least one metal selected from the group consisting of titanium, vanadium, chromium, zirconium, niobium, molybdenum, tantalum and tungsten or an alloy of one or more of these metals with one or more of these or further metals and wherein the intermediate layer (16) is a conversion layer of the base layer (14),
**characterized in that**
the sensor (10) comprises at least one additive which is at least partially arranged in the pores of the cover layer (18) and which serves to adapt the sensor to substances to be measured.

2. Sensor according to claim 1, **characterized in that** the cover layer (18) is at least partially made of colloidal graphite.

3. Sensor according to claim 1 or 2, **characterized in that** the pore sizes of the cover layer (18) and/or the intermediate layer (16) are in a range from ≥ 10 nm to ≤ 5000 nm.

4. Sensor according to any one of claims 1 to 3, wherein the at least one additive comprises a noble metal, such as in particular gold, platinum, palladium, rhodium, iridium, ruthenium or an alloy of one or more of the aforementioned metals.

5. Sensor according to claim 1 or 4, **characterized in that** the at least one additive is arranged on a carrier material, such as, for example, on activated carbon, on gamma aluminum oxide or on titanium dioxide.

6. Method for producing a sensor (10) according to any one of claims 1 to 5, comprising the method steps:
a) providing a base layer (14), wherein the base layer (14) comprises a metal;
b) applying an intermediate layer (16) onto at least a part of the base layer (14) in such a way that the intermediate layer (16) is at least partially arranged on the base layer (14) and is in contact therewith, wherein the intermediate layer (14) comprises a metal oxide; and
c) applying a cover layer (18) onto at least a part of the intermediate layer (16) such that the cover layer (18) is at least partially arranged on the intermediate layer (16) and is in contact therewith, wherein the cover layer (18) is porous and comprises a material which is selected from the group consisting of electrically conductive carbon compounds, such as in particular graphite or carbon nanotubes, organic electrical conductors and base metals, and wherein the pores of the cover layer (18) comprise an additive which serves to adapt the sensor to substances to be measured.

7. Method according to claim 6, comprising the method steps:
d) providing an electrolyte;
e) contacting a base layer (14) with the electrolyte;
f) contacting an electrode with the electrolyte, wherein
g) the base layer (14) is connected as an anode and the electrode as a cathode;
h) applying a voltage between the electrode and the base layer (14) for a predetermined period of time in order to form an oxide layer as the intermediate layer (16);
i) removing the base layer (14) with the intermediate layer formed in step h) from the electrolyte;
j) applying a cover layer (18) onto at least a part of the intermediate layer (16).

8. Method according to claim 7, **characterized in that** an alkali or an acid, in particular an acid, is used as the electrolyte in a concentration range from ≥ 0.1 mol/liter to ≤ 16 mol/liter.

9. Method according to claim 7 or 8, **characterized in that** a voltage in a range from ≥ 50 V to ≤ 200 V, in particular 170 V is applied.

10. Method according to any one of claims 7 to 9, **characterized in that** the electrolyte is cooled during step h).

11. Method according to any one of claims 6 to 10, **characterized in that** a plurality of base layer units fastened to one another is provided in step a), wherein a plurality of sensor units is formed in steps b) and c) and wherein the individual sensor units are separated after method step c) in particular by a cutting tool.

12. Use of a sensor (10) according to any one of claims 1 to 5 as a gas sensor and/or as a liquid sensor.

## Revendications

1. Capteur avec une structure stratifiée (12), dans lequel la structure stratifiée (12) présente au moins une couche de base (14), une couche centrale (16) et une couche de revêtement (18), où la couche centrale (16) est disposée au moins partiellement sur la couche de base (14) et est en contact avec celle-ci, et où la couche de revêtement (18) est disposée au moins partiellement sur la couche centrale (16) et est en contact avec celle-ci, où la couche de base (14) présente un métal, où la couche centrale (16) présente un oxyde métallique , et où la couche de revêtement (18) est poreuse et présente un matériau qui est choisi dans le groupe comprenant des composés carbonés électriquement conducteurs comme, en particulier, le graphite ou des nanotubes de carbone, des conducteurs électriques organiques et des métaux non nobles, et où la couche de base (14) et la couche de revêtement (18) peuvent être mises en contact électriquement pour une mesure de conductivité et/ou une mesure de résistance, où la couche de base (14) présente au moins un métal qui est choisi dans le groupe comprenant le titane, le vanadium, le chrome, le zirconium, le niobium, le molybdène, le tantale et le tungstène ou un alliage à partir d'un ou de plusieurs de ces métaux avec un ou plusieurs de ces métaux ou d'autres métaux et où la couche centrale (16) est une couche de conversion de la couche de base (14), **caractérisé en ce que**
le capteur (10) présente au moins un additif qui est disposé au moins partiellement dans les pores de la couche de revêtement (18) et qui sert à adapter le capteur aux substances à mesurer.

2. Capteur selon la revendication 1, **caractérisé en ce que** la couche de revêtement (18) est fabriquée au moins partiellement à base de graphite colloïdal.

3. Capteur selon la revendication 1 ou la revendication 2, **caractérisé en ce que** les largeurs de pores de la couche de revêtement (18) et/ou de la couche centrale (16) se situent dans une plage ≥ 10 nm à ≤ 5000 nm.

4. Capteur selon l'une des revendications 1 à 3, dans lequel au moins un additif comprend un métal noble, comme, en particulier, de l'or, du plaine, du palladium, du rhodium, de l'iridium, du ruthénium ou un alliage à base d'un ou de plusieurs des métaux précités.

5. Capteur selon la revendication 1 ou la revendication 4, **caractérisé en ce qu'**au moins un additif est disposé sur un matériau support, comme, par exemple, sur du carbone activé, sur un oxyde d'aluminium gamma ou sur du dioxyde de titane.

6. Procédé de fabrication d'un capteur (10) selon l'une des revendications 1 à 5, comprenant les étapes de procédé :
a) de fourniture d'une couche de base (14), la couche de base (14) présentant un métal,
b) de dépôt d'une couche centrale (16) sur au moins une partie de la couche de base (14) de telle manière que la couche centrale (16) se trouve disposée au moins partiellement sur la couche de base (14) et est en contact avec celle-ci, la couche centrale (14) présentant un oxyde métallique, et
c) de dépôt d'une couche de revêtement (18) sur au moins une partie de la couche centrale (16) de telle manière que la couche de revêtement (18) se trouve disposée au moins partiellement sur la couche centrale (16) et est en contact avec celle-ci, la couche de revêtement (18) étant poreuse et présentant un matériau qui est choisi dans le groupe comprenant des composés carbonés électriquement conducteurs, comme, en particulier, le graphite ou des nanotubes de carbone, des conducteurs électriques organiques et des métaux non nobles, et où les pores de la couche de revêtement (18) présentent un additif qui sert à adapter le capteur pour des substances à mesurer.

7. Procédé selon la revendication 6, comprenant les étapes de procédé :
d) de fourniture d'un électrolyte ;
e) de mise en contact d'une couche de base (14) avec l'électrolyte ;
f) de mise en contact d'une électrode avec l'électrolyte, où
g) la couche de base (14) est branchée pour servir d'anode et l'électrode est branchée en tant que cathode,
h) d'application d'une tension entre l'électrode et la couche de base (14) pendant un intervalle de temps prédéterminé pour la formation d'une couche d'oxyde servant de couche centrale (16) ;
i) de retrait de la couche de base (14) avec la couche centrale formée dans l'étape h) de l'électrolyte ;
j) de dépôt d'une couche de revêtement (18) sur au moins une partie de la couche centrale (16).

8. Procédé selon la revendication 7, **caractérisé en ce qu'**une lessive alcaline ou un acide, en particulier un acide, est employé en tant qu'électrolyte, dans une plage de concentration ≥ 0,1 Mole/litre à ≤ 16 Moles/litre.

9. Procédé selon la revendication 7 ou la revendication 8, **caractérisé en ce qu'**une tension est appliquée dans une plage ≥ 50 V à ≤ 200 V, notamment de 170 V.

10. Procédé selon l'une des revendications 7 à 9, **caractérisé en ce que** l'électrolyte est refroidi pendant l'étape h).

11. Procédé selon l'une des revendications 6 à 10, **caractérisé en ce que**, dans l'étape a), une multiplicité d'unités de couche de base fixées les unes aux autres est préparée, où, dans les étapes b) et c), une multiplicité d'unités de capteurs est élaborée et où les unités de capteurs individuelles sont séparées après l'étape de procédé c), notamment à l'aide d'un outil de découpe.

12. Emploi d'un capteur (10) selon l'une des revendications 1 à 5 en tant que capteur de gaz et/ou en tant que capteur de liquides.
